# EUROPEAN PATENT APPLICATION

(11) **EP 4 848 170 A1**
(43) Date of publication of application: **02.12.2026**
(21) Application number: 26173633.4
(22) Date of filing: 21.04.2026
(51) Int. Cl.: G06Q 10/0635, G06Q 10/04

(54) **DAMAGE ESTIMATION METHOD AND DAMAGE ESTIMATION PROGRAM**

(30) Priority: 29.05.2025 JP 2025089896
(71) Applicant: FUJITSU LIMITED, Kawasaki-shi, Kanagawa 211-8588 (JP)
(72) Inventor: AMEMIYA, Satoshi, Kawasaki-shi, Kanagawa, 211-8588 (JP); OHTANI, Takeshi, Kawasaki-shi, Kanagawa, 211-8588 (JP); INOMATA, Akihiro, Kawasaki-shi, Kanagawa, 211-8588 (JP); MIZUTANI, Masami, Kawasaki-shi, Kanagawa, 211-8588 (JP); OTSUKA, Hiroshi, Kawasaki-shi, Kanagawa, 211-8588 (JP)
(74) Representative: Hoffmann Eitle

(57) **Abstract**

Provided is a damage estimation method including generating a third map including a plurality of third stress values obtained by adding each of a plurality of second stress values in a second map in which the plurality of second stress values corresponding to a degree of risk of a second disaster occurring in association with a first disaster are arranged to each of a plurality of first stress values in a first map in which the plurality of first stress values corresponding to a magnitude of power of the first disaster are arranged, generating a learned model obtained by machine learning a relationship between a stress value calculated based on past first information on the first disaster and past second information on the second disaster and total damage caused to a supplier belonging to a supply chain by the first disaster and the second disaster, and estimating damage to the supplier based on the plurality of third stress values and the learned model.

## Description

### FIELD

A certain aspect of the embodiments described herein relates to a damage estimation method and a damage estimation program.

### BACKGROUND

A business risk calculation system is known which evaluates the business interruption risk by taking into consideration the earthquake risk of not only one enterprise but also each related facility (supply chain) (see, for example, Japanese Patent Application Publication No. 2009-53977).

### SUMMARY

The present invention has been made in view of those circumstances, and an object thereof is to provide a damage estimation method and a damage estimation program for estimating a damage of a supplier in consideration of a second disaster occurring with a first disaster.

According to an aspect of the embodiments, there is provided a damage estimation method including generating a third map including a plurality of third stress values obtained by adding each of a plurality of second stress values in a second map in which the plurality of second stress values corresponding toa degree of risk of a second disaster occurring in association with a first disaster are arranged to each of a plurality of first stress values in a first map in which the plurality of first stress values corresponding to a magnitude of power of the first disaster are arranged, generating a learned model obtained by machine learning a relationship between a stress value calculated based on past first information on the first disaster and past second information on the second disaster and total damage caused to a supplier belonging to a supply chain by the first disaster and the second disaster, and estimating damage to the supplier based on the plurality of third stress values and the learned model.

### BRIEF DESCRIPTION OF DRAWINGS

FIG. 1 is an example of a damage estimation system.
FIG. 2 is an example of a hardware configuration of the damage estimation server.
FIG. 3 is an example of a functional configuration of the damage estimation server.
FIG. 4 is an example of disaster information.
FIG. 5 is an example of geographical hazard information.
FIG. 6 illustrates an example of past damage information.
FIG. 7 is a flowchart illustrating an example of processing executed by the damage estimation server.
FIG. 8 is a diagram for explaining an example of generation of a third stress map.
FIG. 9A is an example of the third stress map.
FIG. 9B is a diagram for explaining an example of estimation of damage to a supplier.
FIG. 10 is a diagram schematically illustrating the embodiment.

### DESCRIPTION OF EMBODIMENTS

When a disaster such as an earthquake or a typhoon caused by a natural phenomenon occurs as a primary disaster, a secondary disaster such as a flood of a river or a landslide disaster may occur in association with the disaster. For example, when a typhoon occurs, depending on the place where the typhoon passes, a flood of a river may occur.

Some suppliers in the supply chain can be severely damaged by a second disaster, such as a river flood, as well as a first disaster such as a typhoon. If a supplier is slow to recover from the damage it has suffered, it may affect suppliers who follow it. Therefore, it is desirable to estimate the damage of the supplier considering not only the first disaster but also the second disaster which occurs with the first disaster. However, it is extremely difficult to estimate the damage to the supplier by taking into account not only the first disaster but also the second disaster.

Hereinafter, embodiments for carrying out the present matter will be described with reference to the drawings.

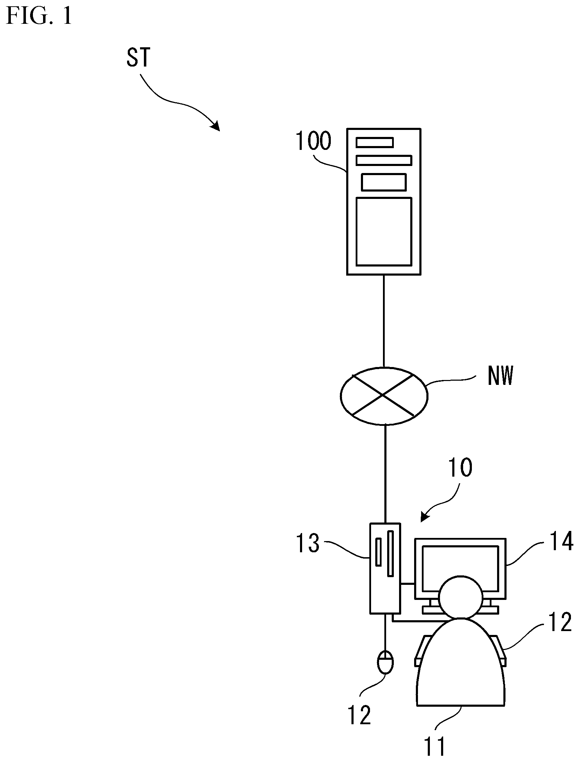

As illustrated in FIG. 1, a damage estimation system ST is a computer system including a terminal device 10 and a damage estimation server 100. The terminal device 10 and the damage estimation server 100 are connected via a communication network NW. The communication network NW is a local area network (LAN) and/or the Internet are provided.

In FIG. 1, a personal computer (PC) is illustrated as an example of the terminal device 10. Although the PC is illustrated, the terminal device 10 is not limited to the PC. The terminal device 10 may be a smart terminal such as a smartphone or a tablet terminal. Although a physical server apparatus is illustrated as an example of the damage estimation server 100 in FIG. 1, the damage estimation server 100 may be a virtual server apparatus. Although one damage estimation server 100 is illustrated as an example in FIG. 1, a plurality of damage estimation servers 100 may be provided in the damage estimation system ST, and various processes executed by the damage estimation servers 100 may be distributed to the plurality of damage estimation servers 100.

The damage estimation system ST operates based on an instruction from the terminal device 10 operated by a user 11. The user 11 is an employee belonging to a business company. Specifically, the user 11 is a person in charge of constructing a supply chain in the business company. The business company may be a manufacturer that manufactures a product or a non-manufacturer that distributes the product. The product may be a material, a part, or a finished product. The business company may be a supplier belonging to the supply chain, or may be a consulting company not belonging to the supply chain.

The user 11 can operate an input device 12 provided in the terminal device 10 to access the damage estimation server 100, thereby using the damage estimation server 100. For example, when the user 11 performs a predetermined operation on the input device 12, a control device 13 of the terminal device 10 transmits an instruction corresponding to the predetermined operation to the damage estimation server 100. Upon receiving the instruction, the damage estimation server 100 executes various processing based on a received instruction.

Although the detail will be provided later, for example, when the damage estimation server 100 receives an instruction corresponding to the predetermined operation, the damage estimation server 100 generates a first stress map in which a plurality of first stress values corresponding to the magnitude of a typhoon are mapped (arranged). The typhoon is an example of a first disaster, and is a natural disaster caused by a natural phenomenon. The first stress map is an example of a first map. Various stress values including the first stress value and a second stress value described later are numerical values of factors that affect various capabilities of the supplier when a disaster occurs. The various capabilities of the supplier include, for example, production capacity, transportation capacity, inventory capacity, and the like.

When the first stress map is generated, the damage estimation server 100 generates a second stress map in which a plurality of second stress values corresponding to the degree of risk of flooding of a river occurring with a typhoon are mapped. River flooding is an example of a second disaster, a geographical disaster that occurs based on geographical factors. The second stress map is an example of the second map. River flooding can be caused by the amount of rainfall when a typhoon passes near a river.

When the second stress map is generated, the damage estimation server 100 calculates a plurality of third stress values obtained by adding the plurality of second stress values to the plurality of first stress values. That is, the damage estimation server 100 calculates a plurality of third stress values by totaling a plurality of first stress values mapped to the first stress map and a plurality of second stress values mapped to the second stress map. The damage estimation server 100 can sum up the plurality of first stress values and the plurality of second stress values based on a common position (specifically, position coordinates). When the damage estimation server 100 calculates a plurality of third stress values, the damage estimation server 100 generates a third stress map in which the plurality of third stress values are mapped. The third stress map is an example of the third map.

When the third stress map is generated, the damage estimation server 100 calculates a stress value caused by both the typhoon and the flood on the basis of the past damage information by the typhoon and the past damage information by the flood. The damage estimation server 100 may calculate the stress value before generating the third stress map. The past damage information due to the typhoon is an example of the first information. The past damage information due to the flood is an example of the second information.

After calculating the stress value, the damage estimation server 100 generates a learned model obtained by machine learning the relationship between the stress value and the total damage caused by the typhoon and the flood to the suppliers belonging to the supply chain. The total damage may be a recovery period in which the supplier recovers from the damage caused by the typhoon and the flood, or may be a cost (expense) required for recovery from the damage. Total damage may be the rate of decline in the supplier's output due to damage caused by the typhoon and the flood. The total damage may be the amount of damage caused by the typhoon and the flood, or the scale of damage (e.g., the degree of damage to the plant) caused by the typhoon and the flood.

When the learned model is generated, the damage estimation server 100 estimates the damage of the supplier based on the plurality of third stress values in the third stress map and the learned model. In this way, the damage estimation server 100 can estimate the damage of the supplier in consideration of the flood occurring with the typhoon.

When the damage estimation server 100 estimates the damage of the supplier, the damage estimation server 100 generates a control signal for displaying a screen including the third stress map and the damage of the supplier, and outputs the control signal to a display device 14 provided in the terminal device 10. Thus, the display device 14 can display a screen including the third stress map and the damage of the supplier. The user 11 can confirm the third stress map and the damage of the supplier by confirming the screen displayed on the display device 14.

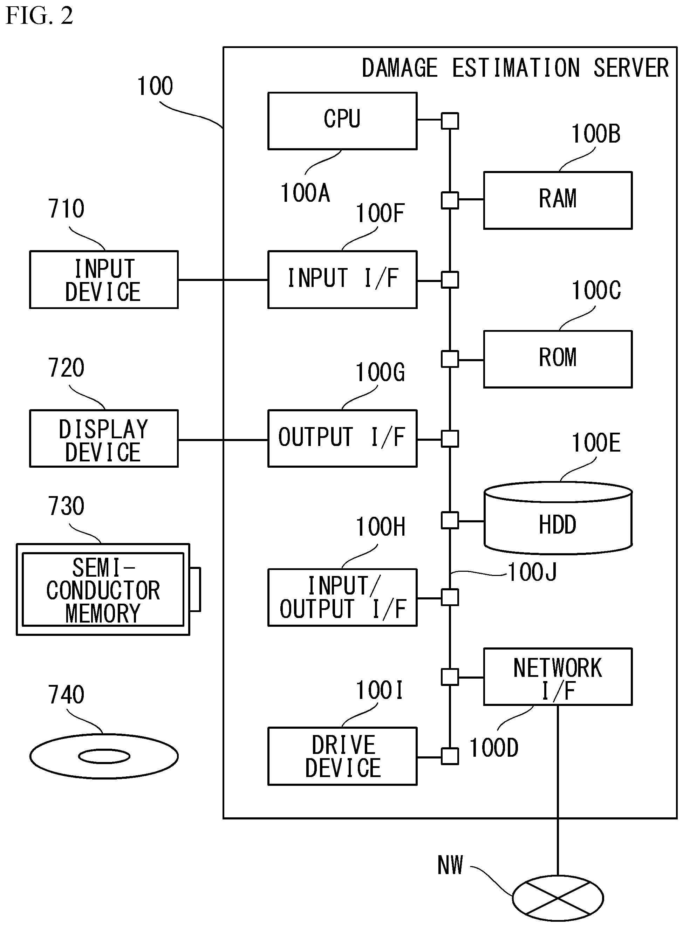

Referring to FIG. 2, a hardware configuration of the damage estimation server 100 will be described. Since the terminal device 10 has basically the same hardware configuration as that of the damage estimation server 100, a detailed description thereof will be omitted.

The damage estimation server 100 includes a central processing unit (CPU) 100A as a processor, and a random-access memory (RAM) 100B and a read only memory (ROM) 100C as memories. The damage estimation server 100 includes a network interface (I/F) 100D and a hard disk drive (HDD) 100E as a storage. A solid-state drive (SSD) may be employed as a storage instead of the HDD 100E.

The damage estimation server 100 may include at least one of an input I/F 100F, an output I/F 100G, an input/output I/F 100H, and a drive device 100I as necessary. The CPU 100A to the drive device 100I are connected to each other by an internal bus 100J. That is, the damage estimation server 100 can be realized by a computer.

An input device 710 is connected to the input I/F 100F. The input device 710 may be, for example, a keyboard, a mouse, a touch panel, or the like. A display device 720 is connected to the output I/F 100G. The display device 720 may be, for example, a liquid crystal display. The input/output I/F 100H is connected to a semiconductor memory 730. The semiconductor memory 730 may be, for example, a universal serial bus (USB) memory or a flash memory. The input/output I/F 100H reads a damage estimation program stored in the semiconductor memory 730. The input I/F 100F and the input/output I/F 100H include, for example, a USB port. The output I/F 100G includes, for example, a display port.

A portable recording medium 740 is inserted into the drive device 100I. The portable recording medium 740 may be, for example, a removable disk such as a compact disc (CD) - ROM or a digital versatile disc (DVD). The drive device 100I reads the damage estimation program recorded in the portable recording medium 740. The network I/F 100D includes, for example, a LAN port, a communication circuit, and the like. The communication circuit includes either or both of a wired communication circuit and a wireless communication circuit. The network I/F 100D is connected to the communication network NW.

In the RAM 100B, the damage estimation program stored in at least one of the ROM 100C, the HDD 100E, and the semiconductor memory 730 is temporarily stored by the CPU 100A. The CPU 100A temporarily stores the damage estimation program recorded in the portable recording medium 740 in the RAM 100B. The CPU 100A executes a stored damage estimation program to implement various functions described later and execute a damage estimation method including various processes described later. The damage estimation program may be adapted to the flowchart described later.

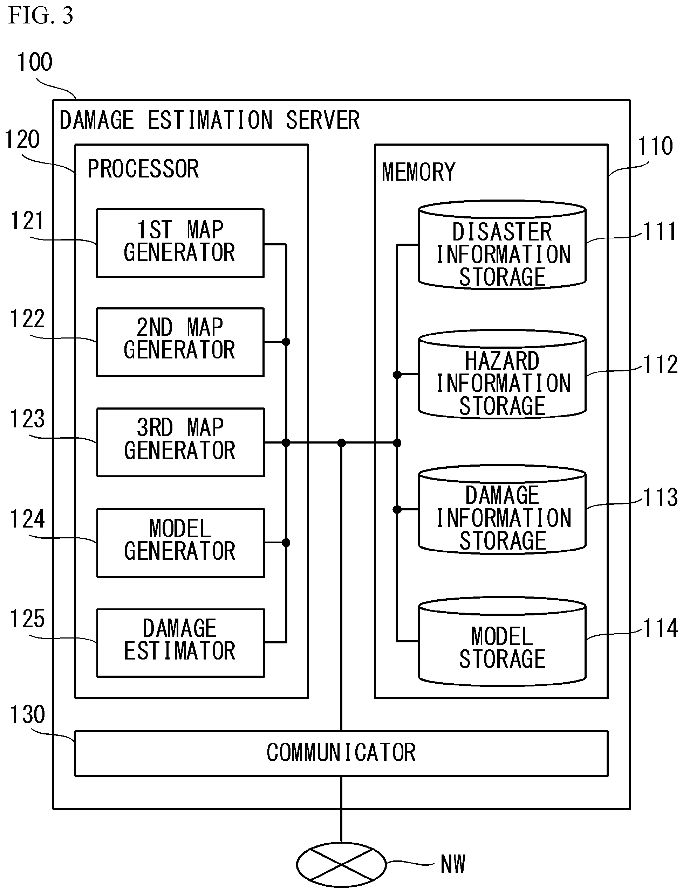

Referring to FIGS. 3 to 6, the functional configuration of the damage estimation server 100 will be described. In FIG. 3, the main part of the function of the damage estimation server 100 is illustrated.

As illustrated in FIG. 3, the damage estimation server 100 includes a memory 110, a processor 120, and a communicator 130. The memory 110 can be realized by either or both of the RAM 100B and the HDD 100E described above. The processor 120 can be realized by the CPU 100A described above. The communicator 130 can be realized by the network I/F 100D described above.

The memory 110, the processor 120, and the communicator 130 are connected to each other. The memory 110 includes a disaster information storage 111, a hazard information storage 112, a damage information storage 113, and a model storage 114. The processor 120 includes a first map generator 121, a second map generator 122, a third map generator 123, a model generator 124, and a damage estimator 125. The processor 120 executes various processes for estimating the damage of the supplier by using the first map generator 121, the second map generator 122, the third map generator 123, the model generator 124, and the damage estimator 125.

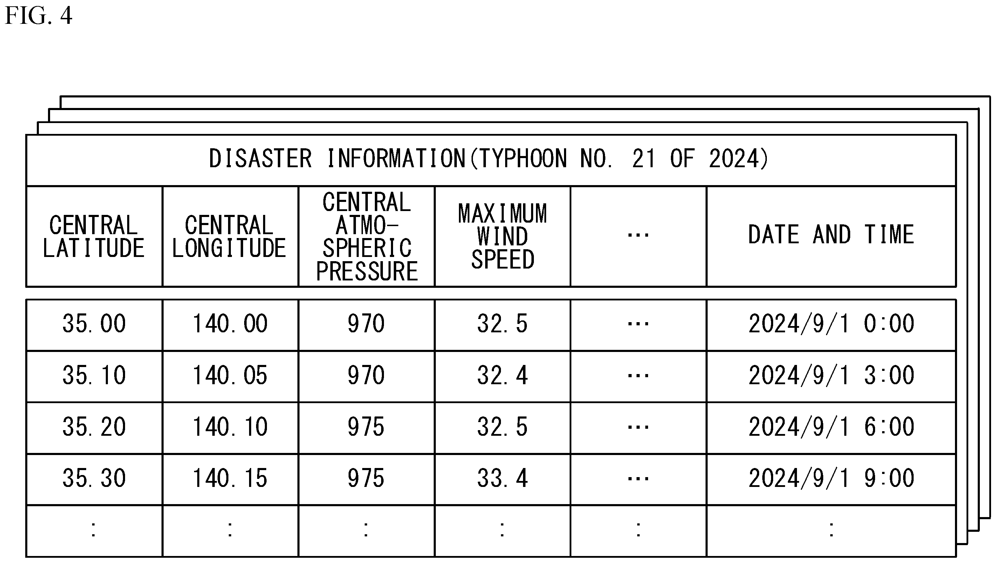

The disaster information storage 111 stores disaster information of a target for estimating the damage of the supplier. As illustrated in FIG. 4, the disaster information includes a plurality of items such as a central latitude, a central longitude, a central atmospheric pressure, a maximum wind speed, and a date and time in the case of a disaster caused by a typhoon. Although not illustrated, items such as the amount of rainfall and the frequency of lightning strikes may be included in the items of the disaster information. The latitude where the center of the typhoon is located is registered in the item of the central latitude. The longitude where the center of the typhoon is located is registered in the item of the central longitude. The pressure at the center of the typhoon is registered in the item of the central atmospheric pressure. The maximum value of the wind speed in the vicinity of the center of the typhoon is registered in the item of the maximum wind speed. The observation date and time of the typhoon is registered in the item of date and time. In this way, the disaster information storage 111 stores disaster information of the target of estimating the damage of the supplier for each disaster. For example, as the disaster information of the target of estimating the damage of the supplier, the most recent typhoon information is stored for each typhoon.

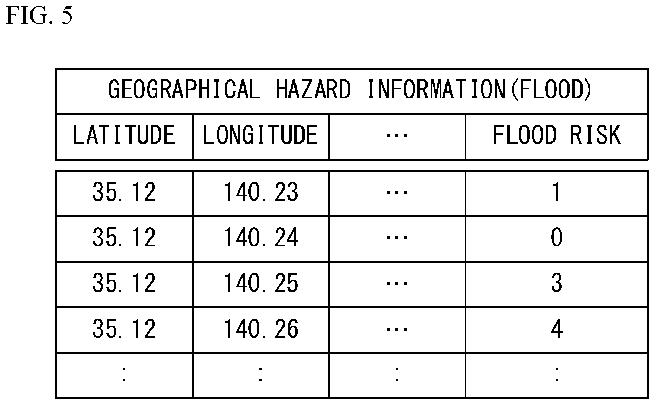

The hazard information storage 112 stores geographical hazard information of a target for estimating damage to the supplier. As illustrated in FIG. 5, the geographical hazard information includes a plurality of items such as latitude, longitude, and flood risk in the case of the disaster caused by a flood of a river occurred based on a geographical factor. Although not illustrated, an item such as a degree of inundation risk may be included in the item of the geographical hazard information. The latitude where any of the fields belonging to the river is located is registered in the item of the latitude. The longitude where any of the fields belonging to the river is located is registered in the item of the longitude.

The flood risk level in a location specified by latitude and longitude is registered in the item of the flood risk. The flood risk level is defined in a plurality of stages, for example, five stages. For example, a flood risk level of "0" indicates that the possibility of the flood is extremely low. A flood risk level of "4" indicates that the possibility of the flood is extremely high. In this way, the geographical hazard information of the target of estimating the damage of the supplier is stored in the hazard information storage 112 in advance. For the preparation of the geographical hazard information, for example, a hazard map of the flood or the inundation managed by the administration is used.

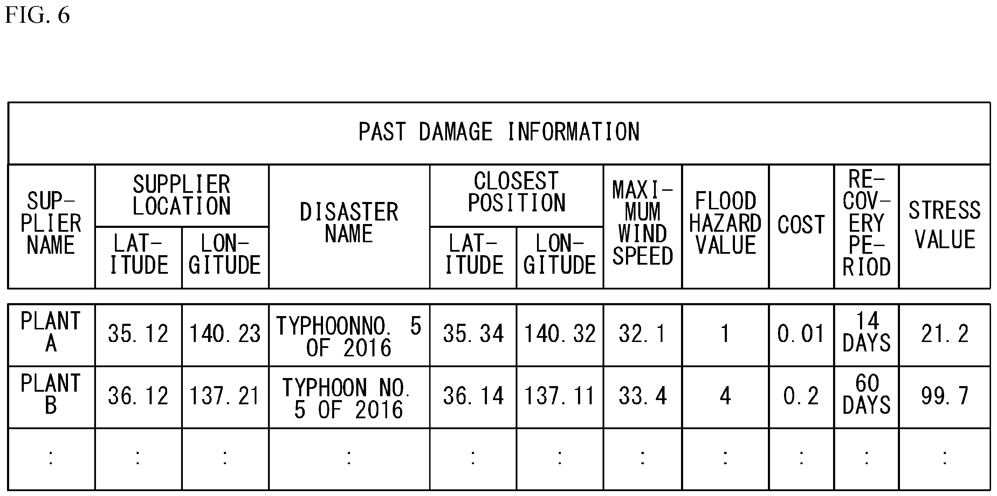

The damage information storage 113 stores past damage information. As illustrated in FIG. 6, the past damage information includes a plurality of items such as supplier name, supplier position, disaster name, closest position, maximum wind speed, flood hazard value, cost, recovery period, and stress value in the case of the disaster caused by a typhoon and flood.

The name of the supplier is registered in the item of the supplier name. The name of the supplier may be a plant name or a company name. The location that can be specified by, for example, the address of the supplier is registered in the item of the supplier location. The item of the supplier location includes a first item for latitude and a second item for longitude. The latitude of the supplier's location is registered in the first item. The longitude of the supplier's location is registered in the second item.

The name of the typhoon that occurred in the past is registered in the item of the disaster name. More specifically, the name of the typhoon that occurred before the estimation time of the supplier damage estimation is registered in the item of the disaster name. For example, in the item of the disaster name, the names of typhoons for the past several years, the past ten odd years, and the past several decades are registered. The center position of the typhoon when the typhoon comes closest to the supplier is registered in the item of the closest position. The item of the closest position includes a third item for latitude and a fourth item for longitude. The latitude of the center position of the typhoon is registered in the third item. The longitude of the center position of the typhoon is registered in the fourth item. The maximum value of the wind speed in the vicinity of the center of the typhoon is registered in the item of the maximum wind speed. First damage information including the position of the center of the typhoon when the typhoon is closest to the supplier and the maximum value of the wind velocity in the vicinity of the center of the typhoon is an example of the first information.

A numerical value representing the risk of the flood occurring with the typhoon is registered in the item of the flood hazard value. The flood occurring with the typhoon may be a flood occurring before the typhoon passes or a flood occurring during the passage of the typhoon. The flood occurred with the typhoon may be a flood occurred after the passage of the typhoon. This numerical value is defined in a plurality of stages, for example, five stages. For example, a value of "1" indicates that a flood of low risk has occurred. A value of "4" indicates that a flood of extremely high risk has occurred. The second damage information including a numerical value representing the risk of a flood occurring with a typhoon is an example of the second information.

The normalized recovery costs incurred by the supplier in recovering from the damage is registered in the item of the cost. For example, if the supplier has spent 20 million yen for recovery from the damage, the recovery cost "0.2" is registered. That is, the cost of recovery is registered in the item of cost in units of 100 million. The period during which the supplier recovered from the damage caused by the typhoon and the flood is registered in the item of recovery period.

The stress value calculated based on the first damage information, the second damage information, and a predetermined mathematical formula described later is registered in the item of the stress value. The calculation of the stress value will be described later in detail. The past damage information may additionally include items other than the plurality of items described above. For example, the past damage information may include items of the amount of damage and the scale of damage caused by the typhoon and the flood, and items of the production reduction rate of the supplier due to the damage caused by the typhoon and the flood.

Returning to FIG. 3, the first map generator 121 generates the first stress map based on the disaster information (see FIG. 4). The second map generator 122 generates the second stress map based on the geographical hazard information (see FIG. 5). The third map generator 123 generates the above-described third stress map based on the first stress map and the second stress map.

The model generator 124 generates the above-described learned model based on the past damage information (see FIG. 6). More specifically, the model generator 124 generates the learned model by performing machine learning on the relationship between the stress value registered in the past damage information and the cost and period of recovery registered in the past damage information. The model generator 124 saves the learned model in the model storage 114. Thus, the model storage 114 stores the learned model.

The damage estimator 125 estimates the damage of the supplier based on the third stress map and the learned model. More specifically, the damage estimator 125 acquires the learned model from the model storage 114, and estimates the damage of the supplier based on the learned model and a plurality of stress values arranged in the third stress map. When the damage estimator 125 estimates the damage of the supplier, the damage estimator 125 generates a control signal for displaying a screen including the third stress map and the damage of the supplier. When the damage estimator 125 generates the control signal, the damage estimator 125 outputs the control signal to the display device 14 provided in the terminal device 10 via the communicator 130.

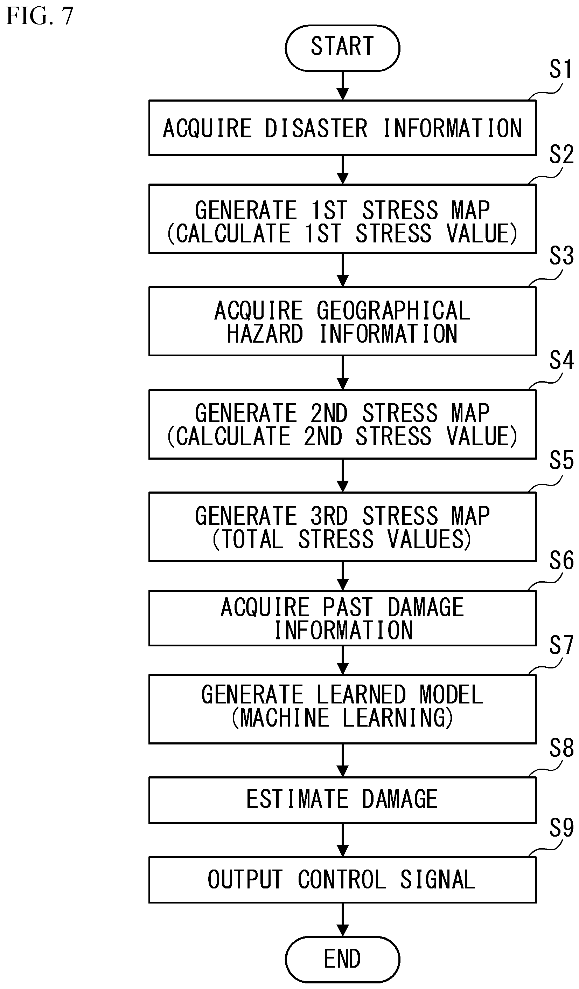

Referring to FIGS. 7 to 9B, the processing executed by the damage estimation server 100 will be described.

First, as illustrated in FIG. 7, the first map generator 121 acquires disaster information (step S1). For example, when the user 11 operates the input device 12 to select a headline of an article posted on the communication network NW reporting the occurrence of a specific typhoon, the first map generator 121 acquires disaster information relating to the specific typhoon.

As described above, the most recent disaster information is stored in advance for each disaster in the disaster information storage 111. Therefore, the first map generator 121 can acquire the disaster information from the disaster information storage 111. The first map generator 121 acquires a topographical map including a path along which the specific typhoon passes from the communication network NW in addition to the acquisition of the disaster information.

Upon acquisition of the disaster information, the first map generator 121 generates a first stress map (step S2). For example, the first map generator 121 calculates the first stress value based on the central atmospheric pressure registered in the disaster information, the distance between the center of the typhoon and the predetermined location, and the following mathematical formula. The predetermined location includes a plurality of calculation positions for calculating the first stress value. That is, the first map generator 121 calculates the first stress value for each calculation positions based on the central atmospheric pressure, the distance from the central position of the typhoon to each of the plurality of calculation positions, and the following mathematical formula. <Formula> $First stress value \left(t, x\right) = Magnitude of power of typhoon / \left(Distance squared\right)$

The first stress value includes a time t as a first parameter. The first stress value includes a calculated position x specified by the latitude and the longitude as a second parameter. The central pressure of a typhoon is used as the magnitude of power of typhoon. Instead of the central atmospheric pressure of the typhoon, the maximum wind speed of the typhoon may be used. According to the above mathematical formula, the magnitude of the first stress value is proportional to the magnitude of the power of the typhoon. On the other hand, according to the above mathematical formula, the magnitude of the first stress value is inversely proportional to the square of the distance.

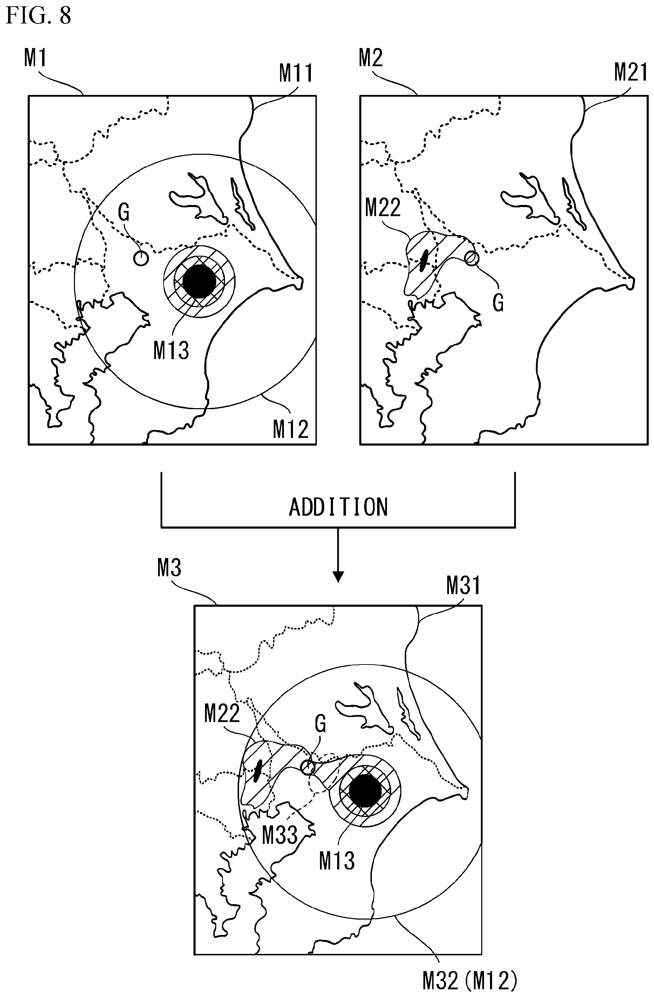

In this way, the first map generator 121 can calculate the first stress value for each calculation position. When the first map generator 121 calculates the plurality of first stress values, the first map generator 121 generates a typhoon heat map in which the plurality of first stress values are mapped by color temperature, and generates a first stress map in which the typhoon heat map is superimposed on the topographic map. Thus, as illustrated in the upper left side of FIG. 8, the first map generator 121 can generate a first stress map M1.

In the first stress map M1, a typhoon heat map M12 is superimposed on the topographic map M11. The typhoon heat map M12 corresponds to a set of first stress values caused by the typhoon at a plurality of calculation positions. The typhoon heat map M12 is concentric, and a central portion M13 thereof indicates that the first stress value is larger than that of the other portions. The first stress value decreases as the distance from the central portion M13 of the typhoon heat map M12 increases. According to the first stress map M1, for example, an assembly plant installed as a supplier in a predetermined place G is included in the typhoon heat map M12. Therefore, the assembly plant is affected by the first stress value caused by the typhoon alone.

Returning to FIG. 7, when the first map generator 121 generates the first stress map, the second map generator 122 acquires the geographical hazard information (step S3). For example, the second map generator 122 acquires the geographical hazard information based on the latitude and longitude for specifying the center position of the typhoon included in the damage information acquired by the first map generator 121. More specifically, the second map generator 122 acquires the geographical hazard information including a latitude and a longitude that are approximate to the latitude and longitude for specifying the center position of the typhoon. As described above, the latitude and longitude are registered in the geographical hazard information. Therefore, the second map generator 122 can acquire the geographical hazard information including the latitude and longitude that are approximate to the latitude and longitude for specifying the center position of the typhoon.

Upon acquisition of the geographical hazard information, the second map generator 122 generates the second stress map (step S4). More specifically, when the second map generator 122 acquires the geographical hazard information, the second map generator 122 extracts the latitude and longitude registered in the geographical hazard information, and extracts a plurality of flood risk levels as a plurality of second stress values. When the plurality of second stress values are extracted, the second map generator 122 generates a flood heat map in which the plurality of second stress values are mapped by color temperature, and generates the second stress map in which the flood heat map is superimposed on the topographic map. Thus, as illustrated in the upper right side of FIG. 8, the second map generator 122 can generate a second stress map M2.

In the second stress map M2, a flood heat map M22 is superimposed on a same topographic map M21 as the topographic map M11. The flood heat map M22 is a set of second stress values caused by the flood at a plurality of positions specified by latitude and longitude. According to the second stress map M2, the assembly plant located at the predetermined place G partially overlaps the flood heat map M22. Therefore, the assembly plant is affected by the second stress value caused by the flood alone.

Returning to FIG. 7, when the second map generator 122 generates the second stress map, the third map generator 123 generates the third stress map (step S5). More specifically, the third map generator 123 calculates a plurality of third stress values by adding a plurality of second stress values in the second stress map to each of a plurality of first stress values in the first stress map. That is, the third map generator 123 calculates a plurality of third stress values by totaling a plurality of first stress values mapped to the first stress map and a plurality of second stress values mapped to the second stress map.

When the third map generator 123 calculates the plurality of third stress values, the third map generator generates a disaster heat map in which the plurality of third stress values are mapped by color temperature, and generates a third stress map in which the disaster heat map is superimposed on the topographic map. Thus, as illustrated in the lower part of FIG. 8, the third map generator 123 can generate a third stress map M3.

In the third stress map M3, a disaster heat map M32 is superimposed on a same topographic map M31 as the topographic map M11 and the topographic map M21. The disaster heat map M32 includes the typhoon heat map M12 and the flood heat map M22. In the disaster heat map M32, a partial area M33 located between the central portion M13 of the typhoon heat map M12 and the flood heat map M22 is interpolated as a disaster area. According to the third stress map M3, the assembly plant located at the predetermined place G is included in the partial area M33. Therefore, the assembly plant is affected by the third stress value due to both the typhoon and the flood.

Returning to FIG. 7, when the third map generator 123 generates the third stress map, the model generator 124 acquires the past damage information (step S6). For example, the model generator 124 acquires the past damage information of a supplier whose latitude and longitude are similar to the center position of the specific typhoon. As described above, the latitude and longitude of the supplier are registered in the past damage information. Therefore, the model generator 124 can acquire the past damage information of the supplier whose latitude and longitude are similar to the center position of the specific typhoon.

Upon acquiring the past damage information, the model generator 124 generates the learned model (step S7). More specifically, the model generator 124 generates the learned model relating to the recovery period by performing machine learning on the relationship between the stress value registered in the past damage information and the recovery period registered in the past damage information. Machine learning is specifically supervised learning. Thus, the model generator 124 can generate a following function (1) as the learned model. Coefficients ω₁₁, ω₁, and ω₁₃, and a functional form of the function (1) is determined dynamically by the machine learning. $Period of Recovery = {ω}_{11} \times Stress value + {ω}_{12} \times Stress {value}^{2} + {ω}_{13}$ Function (1)

The model generator 124 may generate the learned model relating to the cost of recovery by performing the machine learning on the relationship between the stress value registered in the past damage information and the cost of recovery registered in the past damage information. Thus, the model generator 124 can generate a following function (2) as the learned model. Coefficients ω₂₁, ω₂₂ and ω₂₃, and a functional form of the function (2) is determined dynamically by machine learning. $Cost of Recovery = {ω}_{21} \times Stress value + {ω}_{22} \times Stress {value}^{2} + {ω}_{23}$ Function (2)

The model generator 124 may generate the learned model relating to the production amount decrease rate by performing the machine learning on the relationship between the stress value registered in the past damage information and the production amount decrease rate registered in the past damage information. Thus, the model generator 124 can generate a following function (3) as the learned model. Coefficient ω₃₁, ω₃₂ and ω₃₃, and a functional form of the function (3) is determined dynamically by machine learning. $Production amount decrease rate = {ω}_{31} \times Stress value + {ω}_{32} \times Stress {value}^{2} + {ω}_{33}$ Function (3)

In this way, the model generator 124 can generate various learned models and store them in the model storage 114. From the viewpoint of generating a highly accurate learned model, it is desirable that the model generator 124 acquires necessary and sufficient past damage information. The model generator 124 may execute the processing of steps S6 and S7 before the processing of step S1.

Returning to FIG. 7, when the model generator 124 generates the learned model, the damage estimator 125 estimates the damage (step S8). More specifically, the damage estimator 125 estimates the damage of the supplier based on the plurality of third stress values in the third stress map and the learned model. The damage estimator 125 can estimate the damage of the supplier installed in the predetermined place based on any of the plurality of third stress values and the learned model.

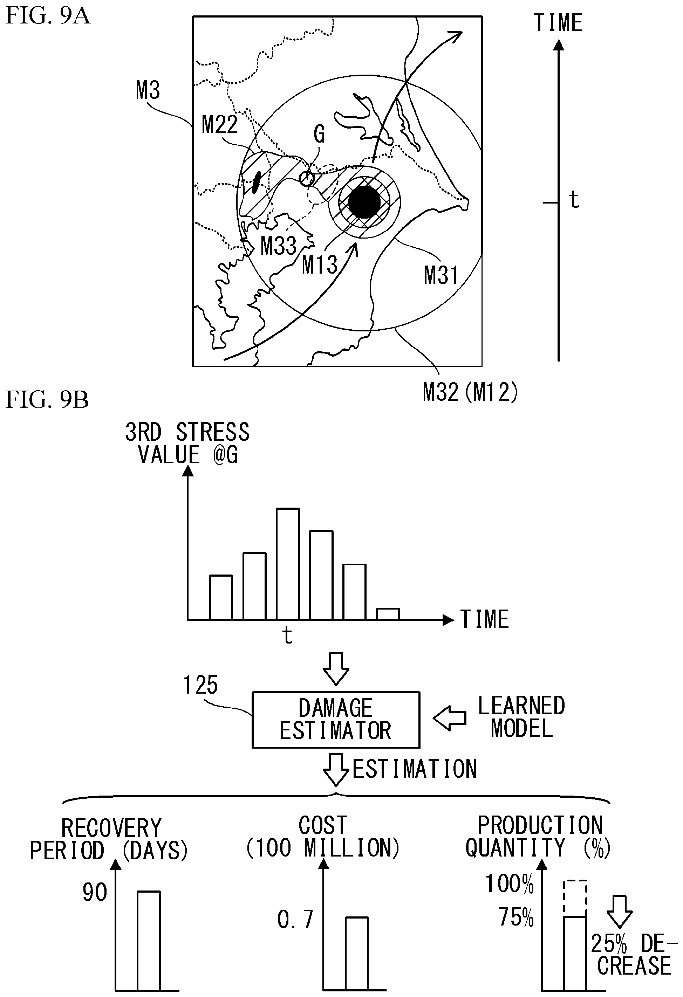

For example, as illustrated in FIG. 9A, in the third stress map M3, the disaster heat map M32 transitions with the passage of time. When the disaster heat map M32 transitions, as illustrated in FIG. 9B, the third stress value changes in time series. In particular, the assembly plant located at the predetermined place G is affected by the third stress value that is the largest at the time t.

As illustrated in FIG. 9B, the damage estimator 125 acquires the third stress value at the time t among the plurality of third stress values from the third map generator 123. The damage estimator 125 also acquires the learned model from the model storage 114. Thus, as illustrated in FIG. 9B, the damage estimator 125 can estimate various damages of the assembly plant installed as the supplier in the predetermined place G.

Returning to FIG. 7, when the damage estimator 125 estimates the damage, the damage estimator 125 outputs the control signal (step S9), and ends the processing. For example, the damage estimator 125 generates the control signal for displaying a screen including the third stress map M3 (see the lower part of FIG. 8) and various damages of the supplier (see FIG. 9B) in time series. When the damage estimator 125 generates the control signal, the damage estimator 125 outputs the control signal to the display device 14 (see FIG. 1). Thus, the display device 14 can display the third stress map M3 and the screen including various damages of the supplier in time series. The user 11 can check the third stress map M3 and various damages of the supplier in time series by checking the screen displayed on the display device 14.

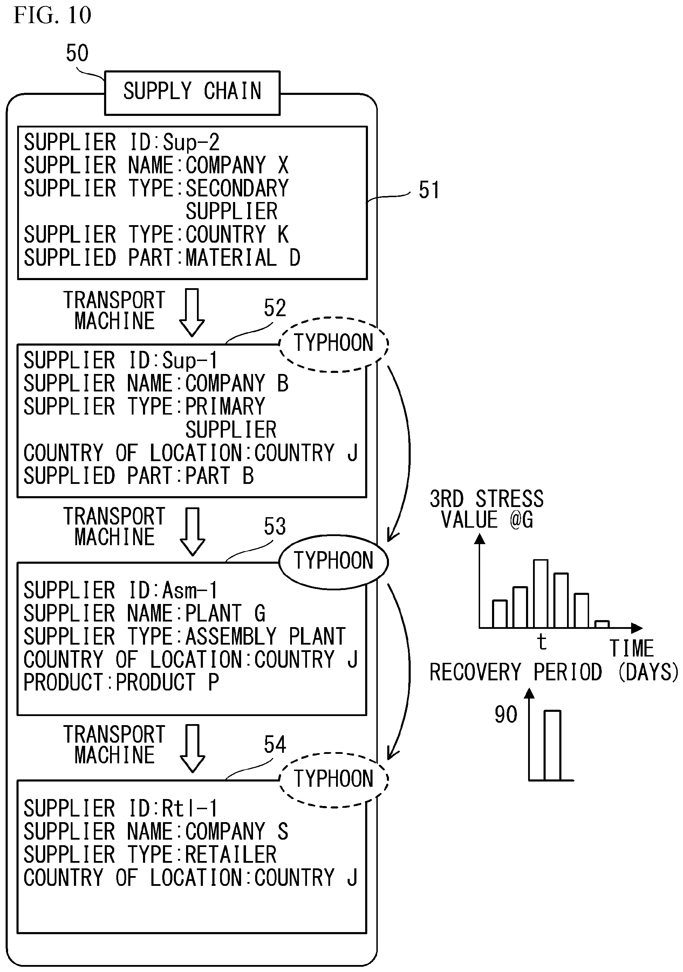

Referring to FIG. 10, the present embodiment will be described schematically.

As illustrated in FIG. 10, a plurality of suppliers 51, 52, 53, and 54 belong to a supply chain 50. For example, the supplier 51 supplies material d to the supplier 52. The supplier 51 is a secondary supplier, and the supplier 52 is a primary supplier. The material d is transported from the supplier 51 to the supplier 52 by a transport machine. The transport machine is, for example, a transport ship. The transport machine may be a transport vehicle, a transport aircraft, a transport railway, etc.

The supplier 52 supplies a part b containing the material d to the supplier 53. The supplier 53 is an assembly plant installed at the predetermined place G, and can manufacture finished products from various parts. A finished product P is transported from the supplier 53 to the supplier 54 by the transport machine. The supplier 54 can supply the finished product P to, for example, a general consumer.

The typhoon occurs and progresses at a place where the supplier 52 is located at a time before the time t, for example. The typhoon stays at the place where the supplier 53 is located at the time t. The typhoon progresses to the location where the supplier 54 is located at a time after the time t. The predetermined place G is a location where the risk of occurrence of the flood is high geographically. Therefore, in the time-series third stress value, the third stress value may become maximum at the time t. In such a case, there is a possibility that the supply of the finished product P is also affected to the supplier 54 following the supplier 53.

However, the damage estimator 125 can estimate the recovery period of the supplier 53 installed at the predetermined place G at each time. Thus, the supplier 54 can sequentially notify the general consumer of the supply time of the finished product P in anticipation of the recovery period. When it is difficult to maintain the supply system of the finished product P by the supply chain 50, the user 11 can consider reviewing the supply system. In this way, the damage estimation server 100 can estimate the damage of the supplier in consideration of the flood occurring with the typhoon, and present the damage of the supplier to the user 11.

Although the preferred embodiment of the present invention has been described in detail, the present invention is not limited to the specific embodiment, and various modifications and changes may be made within the scope of the gist of the present invention described in the claims.

For example, although the typhoon is described as an example of the first disaster in the above-described embodiment, the first disaster is not limited to the typhoon. For example, the first disaster may be an earthquake, a hurricane, etc. In the case of an earthquake, the magnitude of the power of the earthquake is defined by, for example, the magnitude or seismic intensity of the seismic source. In the above formula, the distance from the seismic source is used. The seismic source corresponds to the central portion including the center position of the earthquake.

In the above-described embodiment, the flood of the river is described as an example of the second disaster, but the second disaster is not limited to the flood of the river. For example, the second disaster may be a landslide disaster. In this case, the risk of landslide disaster is defined by a numerical value based on the soil water index. If the first disaster is an earthquake, the second disaster may be damage to a building or a house. In this case, the degree of damage risk is defined by a numerical value based on the hardness of the ground and the strength of the building. For example, if the ground is soft ground, the risk of damage to buildings and the like increases. On the contrary, if the ground is hard, the risk of damage to buildings and the like decreases. Since the case of a house is the same as the case of the building, a detailed description thereof will be omitted.

Further, the first disaster may be a disaster other than a natural disaster. For example, the first disaster may be a human disaster caused by human activities, such as a plagues or a conflict. In the case of the plague, the magnitude of the power of the plague is defined by the mortality and infection rates of the plague, the extent of the plague's transmission, and so on. If the first disaster is the plague, the second disaster may be an outbreak. The risk of the outbreak is defined by a number of factors based on geography, such as the population density of the city and whether the city has implemented disease control measures. In this case, the above formula utilizes the distance from the source of the plague. If the first disaster is the conflict, the second disaster may be a levee breach or dam breach, etc., which occurs based on geographical factors of the conflict area. Levee and dam breaches can be caused by conflict.

Although the exemplary embodiments of the present invention have been illustrated in detail, the present invention is not limited to the above-mentioned embodiments, and other embodiments, variations and modifications may be made without departing from the scope of the present invention.

## Claims

1. A damage estimation method comprising:
generating a third map including a plurality of third stress values obtained by adding each of a plurality of second stress values in a second map in which the plurality of second stress values corresponding to a degree of risk of a second disaster occurring in association with a first disaster are arranged to each of a plurality of first stress values in a first map in which the plurality of first stress values corresponding to a magnitude of power of the first disaster are arranged;
generating a learned model obtained by machine learning a relationship between a stress value calculated based on past first information on the first disaster and past second information on the second disaster and total damage caused to a supplier belonging to a supply chain by the first disaster and the second disaster; and
estimating damage to the supplier based on the plurality of third stress values and the learned model.

2. The damage estimation method according to claim 1, wherein
calculating the plurality of first stress values based on the magnitude of the power of the first disaster and a distance between a center of the first disaster and a predetermined place, and
estimating the damage of the supplier installed at the predetermined place based on any of the plurality of third stress values and the learned model.

3. The damage estimation method according to claim 1 or 2, wherein
calculating the plurality of first stress values at each of times based on the magnitude of the power of the first disaster at each of the times and a distance from a center of the first disaster to a predetermined place, and
estimating the damage of the supplier installed at the predetermined place at each of the times based on any of the plurality of third stress values and the learned model.

4. The damage estimation method according to claim 1 or 2, wherein
the first disaster is either or both of a natural disaster caused by a natural phenomenon and a human-caused disaster including at least one of a disease and a conflict caused by human activities, and
the second disaster is a geographical disaster that occurs based on a geographical factor.

5. The damage estimation method according to claim 1 or 2, wherein
generating a recovery period learned model obtained by machine learning a relationship between the stress value and a recovery period in which the supplier recovered from the damage, and
estimating a recovery period of the supplier based on the plurality of third stress values and the recovery period learned model.

6. The damage estimation method according to claim 1 or 2, wherein
generating a recovery cost learned model obtained by machine learning a relationship between the stress value and a cost required for the supplier to recover from the damage, and
estimating a recovery cost of the supplier based on the plurality of third stress values and the recovery cost learned model.

7. The damage estimation method according to claim 1 or 2, wherein
generating a production quantity decrease rate learned model obtained by machine learning a relationship between the stress value and a production quantity decrease rate of the supplier due to the damage, and
estimating a production quantity decrease rate of the supplier based on the plurality of third stress values and the production quantity decrease rate learned model.

8. The damage estimation method according to claim 1 or 2, wherein
generating a damage amount learned model obtained by machine learning a relationship between the stress value and damage amount of the damage, and
estimating the damage amount of the supplier based on the plurality of third stress values and the damage amount learned model.

9. The damage estimation method according to claim 1 or 2, wherein
generating a damage scale learned model obtained by machine learning a relationship between the stress value and damage scale of the damage, and
estimating the damage scale of the supplier based on the plurality of third stress values and the damage scale learned model.

10. The damage estimation method according to claim 1 or 2, wherein
generating a control signal for displaying a screen including the third map and the damage, and
outputting the control signal to a display device provided in a terminal device.

11. A damage estimation program that causes a computer to execute a process, the process comprising:
generating a third map including a plurality of third stress values obtained by adding each of a plurality of second stress values in a second map in which the plurality of second stress values corresponding to a degree of risk of a second disaster occurring in association with a first disaster are arranged to each of a plurality of first stress values in a first map in which the plurality of first stress values corresponding to a magnitude of power of the first disaster are arranged;
generating a learned model obtained by machine learning a relationship between a stress value calculated based on past first information on the first disaster and past second information on the second disaster and total damage caused to a supplier belonging to a supply chain by the first disaster and the second disaster; and
estimating damage to the supplier based on the plurality of third stress values and the learned model.

12. The damage estimation program according to claim 11 or 12, wherein
calculating the plurality of first stress values based on the magnitude of the power of the first disaster and a distance between a center of the first disaster and a predetermined place, and
estimating the damage of the supplier installed at the predetermined place based on any of the plurality of third stress values and the learned model.

13. The damage estimation program according to claim 11 or 12, wherein
calculating the plurality of first stress values at each of times based on the magnitude of the power of the first disaster at each of the times and a distance from a center of the first disaster to a predetermined place, and
estimating the damage of the supplier installed at the predetermined place at each of the times based on any of the plurality of third stress values and the learned model.

14. The damage estimation program according to claim 11 or 12, wherein
the first disaster is either or both of a natural disaster caused by a natural phenomenon and a human-caused disaster including at least one of a disease and a conflict caused by human activities, and
the second disaster is a geographical disaster that occurs based on a geographical factor.

15. The damage estimation program according to claim 11 or 12, wherein
generating a recovery period learned model obtained by machine learning a relationship between the stress value and a recovery period in which the supplier recovered from the damage, and
estimating a recovery period of the supplier based on the plurality of third stress values and the recovery period learned model.
